# EUROPÄISCHE PATENTSCHRIFT

(11) **EP 0 740 764 B1**
(45) Veröffentlichungstag und Bekanntmachung des Hinweises auf die Patenterteilung: **08.09.1999**
(21) Anmeldenummer: 95907623.3
(22) Anmeldetag: 27.01.1995
(51) Int. Cl.: F24J 2/50, F24J 2/04, F24J 2/40

(54) **WÄRMEDÄMMUNGS- UND WÄRMEKOLLEKTORANORDNUNG**
THERMAL-INSULATION/THERMAL COLLECTOR ASSEMBLY
AGENCEMENT D'ISOLATION THERMIQUE ET DE CAPTEUR THERMIQUE

(30) Priorität: 28.01.1994 DE 9401452 U
(43) Veröffentlichungstag der Anmeldung: 06.11.1996
(73) Patentinhaber: Aschauer, Johann, 4362 Bad Kreuzen (AT)
(72) Erfinder: Aschauer, Johann, 4362 Bad Kreuzen (AT)
(74) Vertreter: Dupal, Helmut, Dipl.-Ing.
(86) Internationale Anmeldenummer: EP9500295
(87) Internationale Veröffentlichungsnummer: WO9520745

(56) Entgegenhaltungen:
- EP-A- 0 138 574
- CH-A- 678 203
- DE-A- 3 931 594
- DE-U- 9 401 452
- FR-A- 2 327 500
- US-A- 4 899 728
- SOLAR ENERGY, Bd. 32,Nr. 3, 1984 OXFORD, Seiten 349-356, LEE JONG HO 'Theoretical study of honeycomb structure collector for space heating'

## Beschreibung

Die Erfindung bezieht sich auf eine strukturtransparente Wärmedämmung für eine integrierte Wärmedämmanordnung für die Anbringung an Gebäuden, gemäß den Merkmalen des Oberbegriffes von Anspruch 1.

Solche Wärmedämmanordnungen sind bereits bekannt, bei denen an sonnenseitigen Gebäudewänden Platten aus wärmedämmendem Material verlegt sind die eine Vielzahl von querverlaufenden Kanälen aufweisen, die sich nach außen zu erweitern und einen die Sonnenstrahlung durchlässigen Verschluß aufweisen und an der Innenseite mit einer die Sonnenstrahlung durchlässigen oder lichtabsorbierenden wärmeleitenden Abdeckung abschließen.

Kanäle dieser Art müssen eine ausreichende Weite besitzen, damit die eingestrahlte Solarenergie bis an die Innenseite der Wärmedämmschicht gelangt. Darüber hinaus bewirkt ein wärmeleitender innerer Abschluß der Kanäle auch eine Vergrößerung der Wärmeleitung nach außen, die in gemäßigten Klimaten seltener erwünscht ist, weil bei kalter Witterung die Wärmeverluste nach außen dadurch vergrößert werden.

Es ist auch bekannt geworden, an der Außenseite einer solchen beschriebenen Wärmedämmschicht Wärmeaustauscherrohre, mit Absorberplatten verbunden, anzubringen um Solarenergie vor Erreichen der Gebäudewand zu gewinnen und abzuführen.

Manche dieser strukturierten Wärmedämmschichten, die mit Kanälen ausgestattet sind, haben einen sehr aufwendigen Aufbau und sind oft zusätzlich zur besseren Übertragung der Solarenergie an der Innenseite von Öffnungen oder Kanälen der Wärmedämmschicht verspiegelt und sollen die Energie auf eine geringe Fläche zusammengefaßt übertragen.

In der Zeitschrift SOLAR ENERGY vol.32, no. 3, 1984 Oxford, pages 349-356, ist eine strukturtransparente Schicht als Wärmekollektor für eine Wand beschrieben, die aus wabenstrukturiertem Beton besteht und vor der Gebäudewand mit einem Spalt zu dieser angeordnet ist. Die in der Struktur gebildeten Kanäle gleicher Dicke sind nach außen zu leicht schräg herabgezogen, um der entgegenströmenden Luft ein besseres Strömungsverhalten zu ermöglichen, die durch den Spalt zwischen Wärmekollektor und Gebäudewand erwärmt nach oben steigt. An der Außenseite des Wärmekollektors ist eine schützende Glasplatte im Abstand davor angebracht.

Anstelle von Beton kann auch Aluminium, insbesonders geschwärzt, als Strukturmaterial verwendet werden, daß der einfacheren Herstellung wegen mit Kanälen von quadratischem Querschnitt versehen ist.

Die Anwendung der erwähnten Materialien ist für die Strahlungsaufnahme und die Wärmeabgabe an die durchströmende Luft wichtig.
Eine Dämmwirkung gegen den Abfluß von Wärme aus der Gebäudewand ist nicht vorgesehen, vielmehr wird die im Kollektor erwärmte Luft zur Raumheizung verwendet.

Die FR 23 27 500 nimmt Bezug auf eine Wärmedämmschicht für einen Solarkollektor, mit einem Strukturaufbau dieser Schicht in Form von Bienenwaben, welcher die Sonnenstrahlung bis auf den Grund der Zellen und damit bis auf die Oberfläche des Solarkollektors dringen läßt.

In der Abhandlung der Literatur wird auf die Notwendigkeit der geeigneten Gestaltung der Zellen zur Verringerung der Wärmeleitung durch die Wand der Wabenzellen hingewiesen und auf die Verwendung von speziell behandeltem Papier für die Herstellung der Wabenzellen zur Herstellung der Bienenwabenstruktur, sowie auf die Verwendung von Papier mit Aluminiumbeschichtung zur Wabenherstellung Bezug genommen.
Als Konstruktionsmaterial werden einerseits Blätter aus organischen Polymeren und andererseits aber auch Schichten aus feinen, Sonnenlicht durchlassenden, miteinander verklebten Fasern, vor allem aus Glas, vorgeschlagen.

Nachteilig ist bei den bekannten Ausführungsformen ihr komplexer, aufwendiger Aufbau.

Aufgabe der Erfindung ist es, eine strukturtransparente Wärmedämmschicht und eine damit aufgebaute, integrierte Wärmedämmanordnung der eingangs genannten Art fortzubilden und besonders für die Anbringung an Außenwänden von Mauerwerk o. dgl., geeignet aufzubauen, sodaß sie billig herstellbar ist und eine wirksame, haltbare Wärmedämmanordnung aufgebaut werden kann, die hohe Gewinne an Solarenergie und niedrige Wärmeverluste in Zeiten niedriger Außentemperaturen ermöglicht, während in Zeiten hoher Außentemperaturen die Aufnahme von solarer Strahlungsenergie herabgesetzt ist und die Abgabe von Wärmeenergie nach außen stattfinden kann.

Diese Aufgabe wird bei einer strukturtransparenten Wärmedämmschicht der eingangs genannten Art mit den Merkmalen des kennzeichnenden Teiles des Anspruches 1 und bei einer integrierten Wärmedämmanordnung mit den Merkmalen des kennzeichnenden Teiles des Anspruches 5, sowie bei einer integrierten Wärmedämmanordnung zur Anbringung an ein Mauerwerk oder dgl., mit den Merkmalen des kennzeichnenden Teiles des Anspruches 11, gelöst.
Die Unteransprüche, die ebenso wie die Anspruch 1, 5 und 11 gleichzeitig einen Teil der Beschreibung bilden, betreffen besonders vorteilhafte Ausgestaltungen und Verwendungsformen der Erfindung.

Die Anwendung eines besonders einfachen Aufbaus der Wärmedämmschicht aus fasrigem Zellulosematerial, wie Pappe in einer Raumstruktur von "Wellpappe-Wabe", aus dünnen Schichten, erlaubt die einfache Herstellung offener Kanäle mit durchgehend gleichmäßigem Lumen, die für die Übertragung der Strahlung mit hohem Wirkungsgrad und für die Diffusion von Feuchtigkeit, sowie für die Erzielung einer hohen mechanischen Festigkeit bei geringem Materialbedarf, gleichermaßen gut geeignet sind.

Dabei ist die Verwendung von besonders strukturierten und insbesonders von gewellten Bahnen von Wärmedämmaterial von Vorteil, das bevorzugt unter Zwischenschaltung von ebenen Bahnen des gleichen Materials, einfach zu verarbeiten ist und eine gut versteifte Struktur der Wärmedämmschicht mit Kanälen von gleichmäßigem Lumen und im Vergleich zur Dicke der Wärmedämmschicht geringen Durchmessers ergibt und eine kostengünstige Massenfertigung aus preisgünstig zugänglichem Material erlaubt.

Bei der unter Schutz gestellten strukturtransparenten Wärmedämmschicht ergibt sich durch eine Bemessung der gebildeten Kanäle, bei der deren Länge deren Durchmesser wesentlich übersteigt, daß bei hohem Sonnenstand die Einstrahlung von Solarenergie weniger tief in die Wärmedämmschicht dringt und wodurch die Erwärmung weiter außen erfolgt und die Aufnahme der Wärme durch die Gebäudewand verringert wird, während bei tieferem Sonnenstand die Einstrahlungstiefe der Sonnenergie erhöht ist und damit ein größerer Anteil der eingestrahlten Solarenergie als Wärme an die Gebäudewand übertragen wird.

Die Herstellung einer strukturtransparenten Wärmedämmschicht, in Form eines Wellpappen-Wabenmaterials, mit einer Raumstruktur, die im wesentlichen jener eines Materials, wie es im Tischlereigewerbe für die Füllung von verschlossenen Hohlräumen, beispielsweise von Türen, Tischplatten o.dgl., Verwendung findet gleicht, aus aufeinander geklebten Bahnen eines fasrigen Zellulosematerials, wie besonders Pappe, ist dafür besonders geeignet, sowohl hinsichtlich der physikalischen Eigenschaften, bei denen sich besonders die fasrige Beschaffenheit und die Herstellung für eine herabgesetzte Wärmeleitung und für eine gute Leitung von Feuchtigkeit und durch die hohe äußere und innere Oberfläche für eine erhöhte Diffusion derselben als vorteilhaft erweist, als auch hinsichtlich der Herstellung selbst.

Die Anwendung eines fasrigen Zellulosematerials für den Aufbau der strukturtransparenten Wärmedämmschicht, in Form einer "Wellpappen-Wabe", ermöglicht die Einfärbung und die Ausrüstung mit feuerhemmenden und/oder bioziden Stoffen, mit kostengünstig zur Verfügung stehenden Mitteln, auf dem Wege des Sprühverfahrens oder eines Tauchverfahrens, das vorteilhafterweise bereits bei der Herstellung angewandt wird. Gleichzeitig kann durch Anwendung geeigneter Ausrüstungsmittel die mechanische Steifigkeit der strukturtransparenten Wärmedämmschicht zusätzlich erhöht werden.

Bei west- oder ostseitigen Gebäudewänden oder stark witterungsausgesetzten Wänden ist die Verwendung einer strukturtransparenten Wärmedämmschicht mit schräg nach außen unten ausgerichteten Kanälen günstiger, weil einerseits das Eindringen von Feuchtigkeit in die Kanäle vermindert wird und andererseits durch die Eigenverschattung der Kanäle die Einstrahlungstiefe von Solarenergie auch bei niedrigem Sonnenstand verringert wird.

Durch den unter Schutz gestellten Aufbau der strukturtransparenten Wärmeschicht ist die Übertragung der eingestrahlten Solarenergie in das Innere der Wärmedämmschicht sowohl durch Strahlung selbst, als auch durch Wärmeleitung der umgewandelten Strahlungsenergie in dem Material der Wärmedämmschicht möglich.

Bei einer integrierten Wärmedämmanordnung ergibt die Anbringung einer transparenten Abdeckung an der Außenseite der strukturtransparenten Wärmedämmschicht, der vorbeschriebenen, unter Schutz gestellten Art, einen wirksamen Schutz gegen Regen und Schnee, ohne daß die Zufuhr von Solarenergie oder die Abfuhr von Wärme erschwert wird.
Dabei wird bei einer, nach innen zu dicht an der Außenwand eines Mauerwerks oder dergleichen oder an einer an dieser angebrachten Zwischenschicht, angebrachten strukturtransparenten Wärmedämmschicht einer integrierten Wärmedämmanordnung die Durchströmung von Luft verhindert, wodurch die konvektive Strömung in den Kanälen der strukturtransparenten Wärmedämmschicht und der konvektive Wärmetransport verringert ist; gleichzeitig wird durch die dichte Anbringung auf dem Mauerwerk die Diffusion von Feuchtigkeit aus der Mauer sehr stark begünstigt.

Die Abführung von Feuchtigkeit durch kapillare Leitung und durch Diffusion in die Luftschicht der Hinterlüftung der transparenten Abdeckung der integrierten Wärmedämmanordnung wird durch poröse oder mit Bohrungen versehene Abdeckplatten einer diffusionsoffenen transparenten Abdeckung noch weiter verbessert, wobei deren wasserabweisende Abdeckung das Eindringen von Wasser von außen verhindert.

Bei einer integrierten Wärmedämmanordnung, bei der eine transparente Abdeckung an der Außenseite der strukturtransparenten Wärmedämmschicht, bei der ein lotrecht verlaufender Spalt als Hinterlüftung zwischen der transparenten Abdeckung und der Wärmedämmschicht freigelassen ist, ermöglicht dieser eine wirksame Abführung der oberflächennah eingestrahlten Wärme und die transparente Abdeckung bildet einen wirksamen Schutz gegen Regen und Schnee.

Für die Kühlung an der Innenseite einer strukturtransparenten Wärmedämmschicht ist die Anbringung einer als Wärmeaustauschschicht ausgebildeten Zwischenschicht zu einer Außenwand eines Mauerwerks o.dgl., vorgesehen, die mit Wärmeaustauscherrohren oder Luftkanälen versehen ist, in denen die Wärme vermittels eines flüssigen Wärmeaustauschmittels, beispielsweise Wasser, oder mit Luft abgeführt werden kann.

Je nach dem, ob die Wärmeabfuhr in die Hinterlüftung zwischen der transparenten Abdeckung und der strukturtransparenten Wärmedämmschicht der integrierten Wärmedämmanordnung oder zwischen dieser und der Außenwand eines Mauerwerks o.dgl. bevorzugt erfolgen soll, erlaubt die bewegliche, besonders die verschiebliche Anordnung der strukturtransparenten Wärmedämmschicht, mit der die Breite des nach außen und des nach innen zu angeordneten Hinterlüftungsspaltes, je nachdem in welcher Richtung und in welchem Maß der Wärmefluß in der integrierten Wärmedämmanordnung eingestellt werden soll, verändert werden kann.

Eine Verbesserung der Übertragung der Solarenergie an die strukturtransparente Wärmedämmschicht einer integrierten Wärmedämmanordnung wird besonders einfach und wirksam mit einer transparenten Abdeckung erreicht, die aus einem strukturierten Glas aufgebaut ist, mit dem bereits ein großer Teil der Reflexionsverluste vermieden werden kann.
Eine Anordnung, bei der die strukturtransparente Wärmedämmschicht satt an der Außenwand des Mauerwerks, o.dgl., eines Gebäudes anliegt, wird die Abführung und Zuführung von Feuchtigkeit durch kapillare Leitung und durch Diffusion aus dem Mauerwerk, durch die strukturtransparente Wärmedämmschicht hindurch, in die Luftschicht der Hinterlüftung der transparenten Abdeckung der integrierten Wärmedämmanordnung oder parenten Abdeckung der integrierten Wärmedämmanordnung oder durch die poröse oder mit Bohrungen versehenen Abdeckplatten einer diffusionsoffenen transparenten Abdeckung, nach außen oder von außen nach innen zu, noch weiter verbessert. Durch diesen Anteil des materiellen Wärmetransportes mit dem System Wasser/Wasserdampf, wird der Wärmestrom in die Außenwand des Mauerwerks und aus dieser heraus in die strukturtransparente Wärmedämmschicht hinein und durch diese hindurch, je nach Richtung des Temperaturgefälles, sehr wesentlich beeinflußt, wobei der höhere oder niedrigere Wärmetransport, der im wesentlichen mit dem Sonnenstand korreliert, jeweils im Sinne einer Verringerung des spezifischen Wämedurchgangs beeinflußt wird.

Eine Beschleunigung der Übertragung der eingestrahlten Solarenegie ist bei Wärmeübertragung mit Konvektion dann sehr wirksam, wenn die gesamte integrierte Wärmedämmanordnung von Luft durchströmt wird, die von der Hinterlüftung der Abdeckung durch die Kanäle der strukturtransparenten Wärmedämmschicht und durch Kanäle der Steine des Mauerwerks hindurch in den innenliegenden Luftkanal an der Innenwand des Mauerwerks geführt wird. oder bei Fehlen des Luftkanals unmittelbar an der Innenwand des Mauerwerks ausströmt.

Bei vordringlich guter Wärmeleitung zwischen der Abdeckung und der Außenwand des Mauerwerks eines Gebäudes werden Luftspalte zwischen den Wandelementen hingegen vermieden.

Durch die bei dieser integrierten Wärmedämmanordnung erreichbaren erhöhten Temperatur, im Bereich der Außenwand des Mauerwerks und in diesem selbst, werden mit Hilfe der strukturtransparenten Wärmedämmschicht aus "Wellpappen-Wabe", bei deren Struktur die kapillare Leitung von Feuchtigkeit und deren intensive Diffusion erhalten ist, die Kapillaren des Mauerwerks mit der Zeit ausgetrocknet und das Nachziehen von Feuchtigkeit aus dem Untergrund gesperrt, sodaß diese die Austrocknung von feuchtem Mauerwerk eingesetzt werden kann.

Je nach den Erfordernissen der Wärmeübertragung oder der bevorzugten Entfernung von Feuchtigkeit aus dem Mauerwerk kann der Aufbau der integrierten Wärmedämmanordnung entsprechend abgewandelt werden.

Für eine integrierte Wärmedämmanordnung ist es, besonders bei west- ostseitiger Ausrichtung einer Wand, günstig, wenn die Kanäle der strukturtransparenten Wärmedämmschicht, in eingebauter Lage an der Außenwand des Mauerwerks, oder dgl., nach außen unten ausgerichtet verlaufen, wodurch die Eigenverschattung bei tiefem Sonnenstand vergrößert und die Erwärmungszone weiter nach außen verlegt wird.

Eine Beschleunigung der Übertragung der eingestrahlten Solarenegie ist bei Wärmeübertragung mit Konvektion dann sehr wirksam, wenn die durch die gesamte integrierte Wärmedämmanordnung hindurchströmende Luft für eine gute Erwärmung von der Hinterlüftung der Abdeckung durch die Kanäle der strukturtransparenten Wärmedämmschicht und durch Kanäle der Steine des Mauerwerks hindurch in den innenliegenden Luftkanal an der Innenwand des Mauerwerks geführt wird oder bei Fehlen eines solchen, unmittelbar an der Innenwand des Mauerwerks ausströmen gelassen wird.

Bei dieser Anordnung können als kostengünstige Wandelemente flachgelegte Hochlochziegel verwendet werden, wobei die große Oberfläche der Kanäle in der strukturtransparenten Wärmedämmschicht und in den Steinen des Mauerwerks als Wärmeaustauschfläche zur Verfügung steht, die durch steigendes Lumen der Kanäle, in Richtung zu der strukturtransparenten Wärmedämmschicht hin, noch weiter verbessert werden kann. Für eine beeinflußbare Erwärmung oder Kühlung der Außenwand des Mauerwerks oder dgl., wird eine Wärmeaustauschschicht zwischen strukturtransparenter Wärmedämmschicht und der Außenwand des Mauerwerks vorgesehen, die mit Wärmeaustauscherrohren oder Luftkanälen versehen ist, in denen die Wärme vermittels eines flüssigen Wärmeaustauschmittels, beispielsweise mit Wasser oder Luft abgeführt werden kann.

Es ist dann möglich, den Wärmetransport in das Innere eines Gebäudes oder umgekehrt von innen nach außen, zu beschleunigen, besonders wenn an der Innenwand des Mauerwerks eine innenliegende Wärmeaustauschschicht die innere Begrenzungswand bildet in der Wärmeaustauscherrohre für ein flüssiges Wärmeaustauschmittel oder Luftkanäle eingebaut sind und mit den Wärmeaustauscherrohren oder den Luftkanälen der Wärmeaustauschschicht an der Mauerwerksaußenwand zu einem Kreislauf verbunden sind.

Die mechanische Befestigung der strukturtransparenten Wärmedämmschicht zwischen einer Lattung auf der außen die transparente Abdeckung angebracht ist und die innen an der Mauerwerksaußenwand des Gebäudes befestigt ist ergibt eine aus einfachen Elementen aufgebaute und einfach herstellbare integrierte Wärmedämmungs- und Wärmekollektoranordnung.

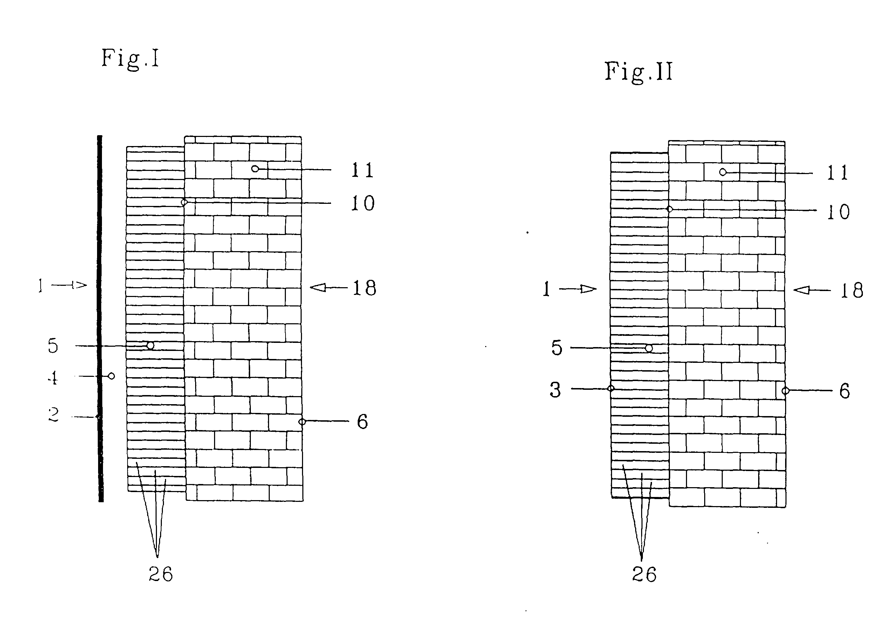

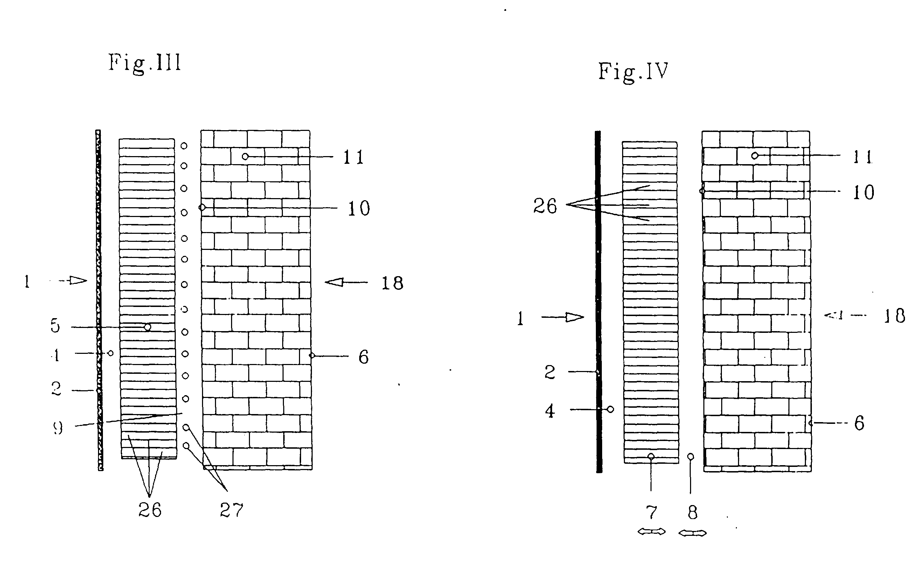

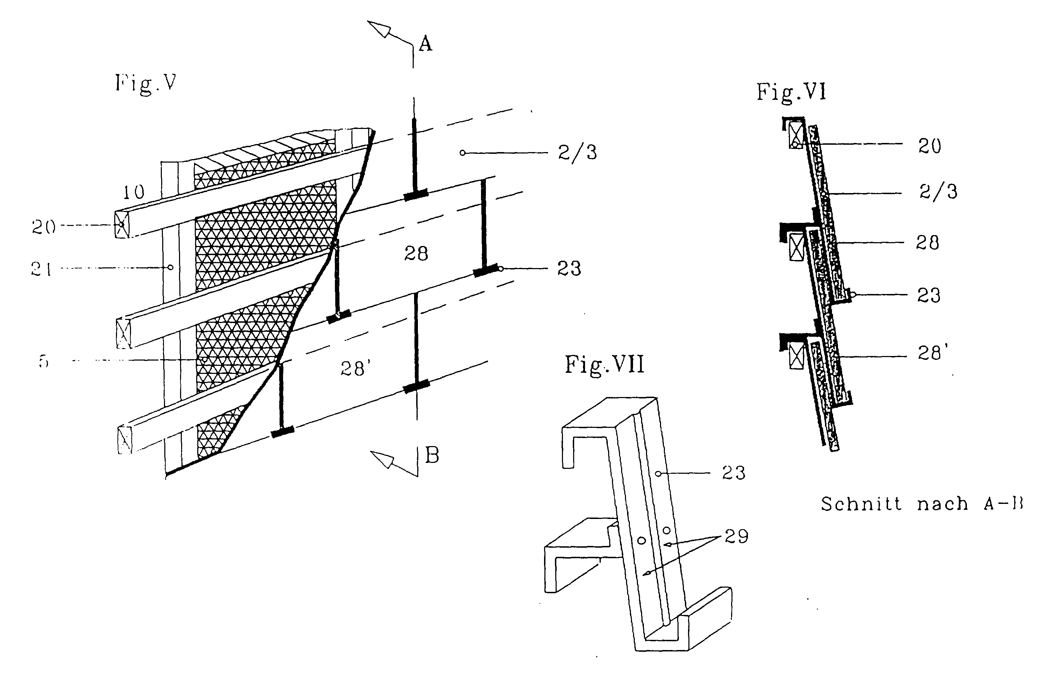

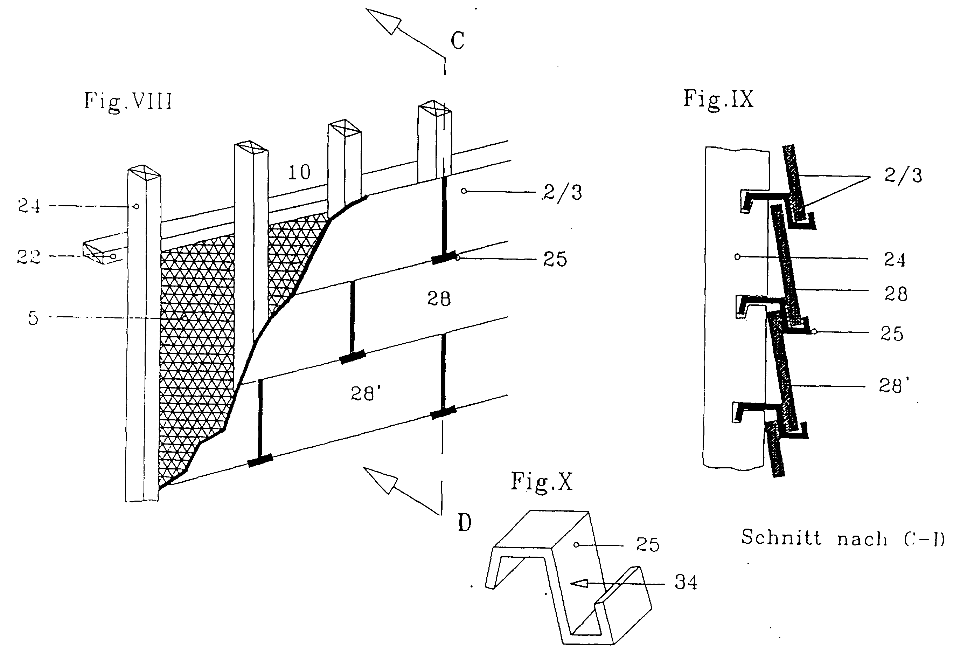

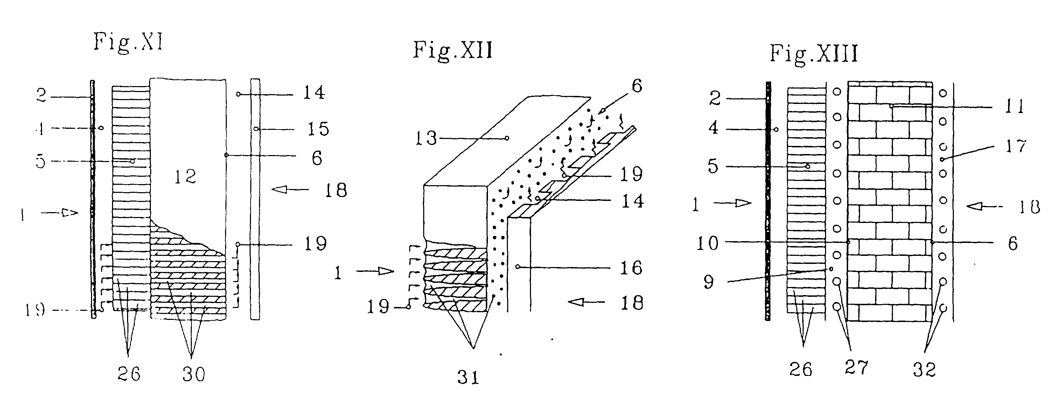

Die Erfindung wird nachstehend anhand der Zeichnung einiger Beispiele erläutert.

Es zeigt:
- Fig. I.: eine integrierte Wärmedämm- und Wärmekollektoranordnung mit einer an einem Mauerwerk satt anliegend angebrachten strukturtransparenten Wärmedämmschicht, außen mit einer transparenten Abdeckung mit Hinterlüftung versehen, im Schnitt,
- Fig. II.: eine integrierte Wärmedämmanordnung mit transparenter diffusionsoffener Abdeckung direkt auf der strukturtransparenten Wärmedämmschicht, im Schnitt,
- Fig. III.: eine integrierte Wärmedämmanordnung nach Fig. I, bei der zwischen Mauerwerk und strukturtransparenter Wärmedämmschicht eine Wärmeaustauschschicht eingeschaltet ist, im Schnitt,
- Fig. IV.: eine integrierte Wärmedämmanordnung, nach Fig. III, bei der die Wärmeaustauschschicht durch einen variablen Hinterlüftungsspalt ersetzt ist und die strukturtransparente Wärmedämmschicht zwischen der transparenten Abdeckung außen und dem Mauerwerk innen hin und her verschiebbar angebracht ist, im Schnitt,
- Fig. V.: eine integrierte Wärmedämmanordnung mit einer Wandverlattung mit eingesetzter strukturtransparenter Wärmedämmschicht und einer transparenten Abdeckung aus Platten, die reihenweise gegeneinander versetzt mit Befestigungsprofilen an der Wandverlattung angebracht sind, in Schrägansicht, teilweise aufgerissen,
- Fig. VI.: eine integrierte Wärmedämmanordnung nach Fig. V, im Schnitt nach A - B,
- Fig. VII.: ein Befestigungsprofil für die Platten der transparenten Abdeckung, in Schrägansicht,
- Fig. VIII.: eine integrierte Wärmedämmanordnung mit einer anderen Wandverlattung mit eingesetzter strukturtransparenter Wärmedämmschicht und einer transparenten Abdeckung aus Platten, die reihenweise gegeneinander versetzt mit Befestigungshaken an der Wandverlattung angebracht sind, in Schrägansicht, teilweise aufgerissen,
- Fig. IX.: eine integrierte Wärmedämmanordnung nach Fig. VIII, im Schnitt, nach C - D,
- Fig. X.: ein Befestigungshaken für die Platten der transparenten Abdeckung, in Schrägansicht,
- Fig. XI.: eine integrierte Wärmedämmanordnung mit einem von Kanälen von außen nach innen durchzogenem Mauerwerk, mit einer nach außen satt anschließenden strukturtansparenten Wärmedämmschicht und einer transparenten Abdeckung mit Hinterlüftung und nach innen zu mit einem innenliegenden Luftkanal mit einer inneren Begrenzungswand, im Schnitt,
- Fig. XII.: einen Teilausschnitt aus dem Mauerwerk nach Fig. XI, mit Steinen mit nach außen erweiterten Kanälen und mit einem, mit in die innere Begrenzungswand eingearbeiteten, zu lotrechten Teilkanälen erweiterten inneren Luftkanal, in Schrägansicht und teilweise geschnitten,
- Fig. XIII.: eine integrierte Wärmedämmanordnung nach Fig. III, mit einer zusätzlichen inneren Wärmeaustauschschicht mit Wärmeaustauscherrohren oder Luftkanälen, eine innere Begrenzungswand bildend, im Schnitt.

Eine integrierte Wärmedämmungs- und Wärmekollektoranordnung ist in Fig. I. dargestellt, bei der ein Mauerwerk 11 den inneren Teil einer Gebäudewand darstellt, deren Innenseite 18 von der Mauerwerksinnenwand 6 gebildet wird und an der die Mauerwerksaußenwand 10 des Mauerwerks 11 eine strukturtransparente Wärmedämmschicht 5 satt anliegt. Diese strukturtransparente Wärmedämmschicht 5 besteht aus dünnen, gewellten Bahnen aus Wärmedämmmaterial, wie Pappefasern, die mit ebenen Zwischenbahnen verklebt sind und über die Tiefe der gebildeten Wärmedämmschicht 5 verlaufende Kanäle 26 bilden, die in der Darstellung angedeutet sind.

Diese strukturtransparente Wärmedämmschicht 5 läßt Solarenergiestrahlung, die in der Richtung der Kanäle 26 verläuft durch ihre Tiefe hindurchdringen, während mit zunehmendem Winkel zur Richtung der Kanäle 26 die Eigenverschattung der Wärmedämmschicht 5 sehr schnell ansteigt.

Diese strukturtransparente Wärmedämmschicht 5 ist zur Aussenseite 1 hin von einer transparenten Abdeckung 2 abgeschlossen und von dieser durch eine Hinterlüftung 4 in Form eines Luftspaltes getrennt, durch den ein Luftstrom zur Kühlung der Wärmedämmanordnung geleitet werden kann.

Die Kanäle 26 der strukturtransparenten Wärmedämmschicht 5 weisen einen geringen Durchmesser im Vergleich zur Tiefe der Wärmedämmschicht 5 auf, sodaß die eingestrahlte Solarenergie bei durchschnittlichem Sonnenstand bereits im äußeren Bereich der strukturtransparenten Dämmschicht 5 absorbiert wird von wo der Wärmetransport durch die Wärmedämmschicht dann durch Wärmeleitung erfolgt.

Bei niedrigem Sonnenstand gelangt dabei die eingestrahlte Solarenergie tiefer in die strukturtransparente Wärmedämmschicht 5 bevor sie absorbiert wird und im günstigsten Fall bis an die Mauerwerksaußenwand 10.

Bei unerwünscht hoher Wärmeeinstrahlung, wie sie an West- und Ostseiten an Gebäuden auftreten kann, sind die Kanäle 26 der strukturtransparenten Wärmedämmschicht 5 schräg nach unten verlaufend hergestellt (nicht dargestellt), wodurch die Eigenverschattung gegenüber der eingestrahlten Solarenergie wesentlich erhöht ist.

Bei der in Fig. II. dargestellten integrierten Wärmedämmungs- und Wärmekollektoranordnung schließt die strukturtransparente Wärmedämmschicht 5 an der Außenseite 1 mit einer diffusionsoffenen transparenten Abdeckung 3, z.B. aus wasserabweisendem Faservlies, wie ausgerüstete Wellpappe, ab, die dicht anliegt.

Die strukturtransparente Wärmedämmschicht 5 ist mit feuerhemmendem Wasserglas-, Borsalz- oder Phosphatlösungen und mit bioziden Mitteln gegen Pilz- und Insektenbefall getränkt und getrocknet.

Um die an die Mauerwerksaußenwand 10 geleitete solare Wärmeenergie bei Überschuß abführen zu können, ist zwischen der strukturtransparenten Wärmedämmschicht 5 und der Mauerwerksaußenwand 10, wie in Fig. III. dargestellt, eine Wärmeaustauschschicht eingeschaltet, in der Wärmeaustauscherrohre oder Luftkanäle 27 angebracht sind, deren Wärmeaustauschmedium, z.B. Wasser oder Luft, die überschüssige Wärme abführt.

Nachdem die Erfordernisse der Wärmedämmung je nach Außentemperatur und Einstrahlung von Solarenergie stark wechseln, ist in Fig. IV. eine Ausführungsform der integrierten Wärmedämmungs- und Wärmekollektoranordnung wiedergegeben, bei der eine Hinterlüftung 4 zwischen der transparenten Abdeckung 2 an der Außenseite 1 und einer ortsvariablen struktransparenten Wärmedämmschicht 7, die in ihrem Aufbau der Wärmedämmschicht 5 entspricht, sowie ein variabler Hinterlüftungsspalt 8 zwischen dieser und der Mauerwerksaußenwand 10 vorgesehen.

Durch Verschieben der ortsvariablen strukturtransparenten Wärmedämmschicht 7 kann dadurch entweder die Hinterlüftung 4 oder der Hinterlüftungsspalt 8 vergrößert oder verkleinert werden, je nachdem ob die Wärmeabfuhr direkt hinter der transparenten Abdeckung 2 oder vor der Mauerwerksaußenwand 10 oder aber an beiden Stellen des Wandaufbaus erfolgen soll.

Die strukturtransparente Wärmedämmschicht 5 kann zwischen der an der Mauerwerksaußenwand 10 befestigten Konterlattung 21 aus lotrecht angeordneten Latten eingesetzt werden, die mit waagrechten Befestigungsprofil- und Befestigungshakenträgern 20 vernagelt sind, an welchen Befestigungsprofile 23 für die Platten 28,28' der transparenten Abdeckung 2 aufgenagelt bzw. eingehängt sind und in die die Platten 28,28' der Abdeckung 2 eingesetzt und oben und unten gehalten sind.

Die Plattenstöße sind dabei über die Befestigungsprofile 23 verlegt, sodaß ablaufendes Regenwasser über die Außenseite 29 eines Befestigungsprofiles 23 nach unten auf die nächste Platte 28' ablaufen kann (Fig. V. - VII.).

Bei einer abgewandelten Befestigungsweise, wie sie in Fig. VII. - IX. wiedergegeben wird, ist eine waagrechte Querlattung 22 an der Mauerwerksaußenwand 10 angebracht, zwischen die die strukturtransparente Wärmedämmschicht 5 eingesetzt ist.

Diese Querlattung 22 ist mit einer lotrechten Traglattung 24 für die transparente Abdeckung 2 versehen, in die Einfräsungen 33 eingearbeitet sind, in die Befestigungshaken 25 für die Platten 28,28' der transparenten Abdeckung 2 eingehängt sind, in deren nach außen und oben gebogenen Hakenteile diese Platten eingestellt sind, während sie an ihrem oberen Ende vom Hakenkörper überdeckt gehalten werden.

Die Plattenstöße der Platten 28,28' sind dabei an die Vorderseite 34 der Befestigungshaken verlegt, sodaß dort eindringendes Regenwasser auf die nächste untere Reihe der Platten abläuft.

Die Platten 28,28' der Abdeckung bestehen aus einem Glas mit genarbter äußerer Oberfläche um Reflexionen im Außenbereich zu vermeiden.

Zur Erhöhung der übertragenen Wärmeleistung kann die Konvektion der Luft herangezogen werden, wie dies in Fig. XI. und XII. dargestellt ist.

In Fig. XI. wird dabei von einer Anordnung nach Fig. I. ausgegangen, bei der die strukturtransparente Wärmedämmschicht 5 satt an der Mauerwerksaußenwand 10 anliegt. Es wird ein Mauerwerk 12 aus liegend, wandoffen verlegten Hochlochziegeln verwendet, deren Löcher 30 durch die Wand hindurch gehen.
An der Mauerwerksinnenwand 6 ist ein innenliegender Luftkanal 14 durch eine in Abstand von der Mauerwerksinnenwand 6 vorgesetzte innere Begrenzungswand 15 geschaffen.

Zur Erwärmung des Gebäudes kann ein Luftstrom 19 aus der Hinterlüftung 4 der transparenten Abdeckung 2 durch die Kanäle 26 der strukturtransparenten Wärmedämmschicht 5 unter gleichzeitiger Aufnahme der eingestrahlten Wärme strömen und gelangt durch die Löcher 30 des Mauerwerks 12 in den innenliegenden Luftkanal 14, von wo dieser nach oben in das Gebäude ausströmt.

In ähnlicher Weise ist es möglich, die Kühlung des Gebäudes dadurch herzustellen, daß ein Luftstrom 19 aus einem kühlen Gebäudebereich, beispielsweise dem Kellerbereich, durch die Gebäudewand mittels Konvektion oder künstlicher Fördermittel in das Gebäudeinnere geleitet wird.

Zur günstigeren Gestaltung des Luftstromes 19 kann ein Mauerwerk 13 aus liegend, wandoffen verlegten Hochlochziegeln verwendet werden, deren Löcher 31 zur Mauerwerksaußenwand 10 hin ihren Durchmesser erweitern, wie in Fig. XII. dargestellt ist.

Zur Verbesserung der Strömungsführung des Luftstromes 19 im innenliegenden Luftkanal 14 ist dieser mit lotrecht verlaufenden Teilkanälen erweitert, die in die innere Begrenzungswand 16 eingearbeitet sind.

Zur Steigerung der Wärmeübertragung zwischen der Außenseite 1 und der Innenseite 18 eines Gebäudes kann bei einer Anordnung nach Fig. III. ein innenliegender Luftkanal 14 durch eine innere Begrenzungswand 16 hergestellt werden, in dem Wärmeaustauscherrohre 32 übereinander angebracht sind, deren Wärmemedium zu- oder abführen kann und die mit den Wärmeaustauscherrohren 27 der Wärmeaustauschschicht 9 an der Mauerwerksaußenwand 10 zu einem Kreislauf verbunden sind ( Fig. XIII.).

### Legende

- 1: Außenseite
- 2: transparente Abdeckung
- 3: diffusionsoffene, transparente Abdeckung
- 4: Hinterlüftung der transparenten Abdeckung 2
- 5: strukturtransparente Wärmedämmschicht
- 6: Mauerwerksinnenwand
- 7: ortsvariable, strukturtransparente Wärmedämmschicht
- 8: variabler Hinterlüftungsspalt
- 9: Wärmeaustauschschicht, an der Mauerwerksaußenwand 10
- 10: Mauerwerksaußenwand
- 11: Mauerwerk
- 12: Mauerwerk, aus liegend, wandoffen verlegten Hochlochziegel
- 13: Mauerwerk, aus liegend, wandoffen verlegten Hochlochziegel mit besonderer Lochform
- 14: innenliegender Luftkanal
- 15: innere Begrenzungswand
- 16: innere Begrenzungswand, mit eingearbeiteten Teilkanälen des innenliegenden Luftkanals 14
- 17: Wärmeaustauschschicht an der Mauerwerksinnenwand 6
- 18: Innenseite
- 19: Luftstrom
- 20: Befestigungsprofil- und Befestigungshakenträger
- 21: Konterlattung
- 22: Querlattung
- 23: Befestigungsprofil
- 24: Traglattung
- 25: Befestigungshaken
- 26: Kanäle in der strukturtransparenten Wärmedämmschicht 5
- 27: Wärmeaustauscherrohre oder Luftkanäle in der Wärmeaustauschschicht 9
- 28,28': Platten der transparenten Abdeckung 2 übereinanderliegender Reihen
- 29: Außenseite des Befestigungsprofiles 23
- 30: Löcher der Hochlochziegel des Mauerwerks 12
- 31: Löcher der Hochlochziegel des Mauerwerks 13 mit zur Mauerwerksaußenwand 10 hin erweitertem Durchmesser
- 32: Wärmeaustauscherrohre in der inneren Wärmeaustauschsschicht 17, an der Mauerwerksinnenwand 6
- 33: Einfräsung in die Traglattung 24
- 34: Außenseite des Befestigungshakens 25

## Patentansprüche

1. Strukturtransparenten Wärmedämmschicht (5), insbesondere für Außenseiten von Gebäuden, mit einer Vielzahl von nebeneinanderliegenden, wenigstens nahezu mit dem Wärmestrom gleichgerichteten, durch die Wärmedämmschicht (5) hindurch verlaufenden, im Verhältnis zu ihrer Schichtdicke dünnen, offenen Kanälen (26), mit im wesentlichen durchgehend gleichförmigen Durchmesser, deren Dämmaterial aus Fasern besteht, im wesentlichen aus Zellulosematerial, wie Papier- oder Pappefasern, in dem die, durch die Wärmedämmschicht verlaufenden, Kanäle freigelassen sind und mit den im Verhältnis zu ihrer Schichtdicke dünnen Elementen, die strukturtransparente Wärmedämmschicht (5) bilden, **dadurch gekennzeichnet, daß** die strukturtransparente Wärmedämmschicht (5), mit einer Raumstruktur einer "Wellpappen-Wabe", aus fasrigem Zellulosematerial, wie Pappe besteht, aus einer Vielzahl von Schichten hin- und hergeführter gewellter Bahnen, insbesonders mit zwischen diesen angeordneten ebenen Bahnen gebildet ist, wobei die von/mit den gewellten Bahnen gebildeten Kanäle (26) einen Durchmesser aufweisen, der gering ist im Verhältnis zur Dicke der strukturtransparenten Wärmedämmschicht (5) und vorzugsweise höchstens ein zehntel von deren Dicke beträgt und bei allen Kanälen im wesentlichen gleich groß ist.

2. Strukturtransparente Wärmedämmschicht nach dem vorhergehenden Anspruch, dadurch gekennzeichnet, daß das Dämmmaterial der strukturtransparenten Wärmedämmschicht (5) aus aufeinandergeklebten Bahnen, aus fasrigem Zellulosematerial, wie Pappe, dessen Eigenschaften der kapillaren Leitung von Feuchtigkeit und deren Diffusion im wesentlichen erhalten sind, besteht, in der die durch die strukturtransparente Wärmedämmschicht (5) verlaufenden Kanäle (26) freigelassen sind.

3. Strukturtransparente Wärmedämmschicht nach einem der vorhergehenden Ansprüche, dadurch gekennzeichnet, daß die aus einer "Wellpappen-Wabe" bestehende, strukturtransparente Wärmedämmschicht (5) zur Farbgebung mit Farbpigmenten und/oder zur Feuerhemmung mit feuerhemmenden Chemikalien, vorzugsweise mit Wasserglas, Borsalzlösungen oder dergleichen und/oder mit bioziden Mitteln ausgestet, vorzugsweise besprüht oder im Tauchverfahren getränkt ist.

4. Strukturtransparente Wärmedämmschicht nach einem der vorhergehenden Ansprüche, dadurch gekennzeichnet, daß die in der strukturtransparenten Wärmedämmschicht (5) angeordneten Kanäle wenigstens leicht schräg zur Oberfläche der Wärmedämmschicht (5) angeordnet sind.

5. Integrierte Wärmedämmanordnung für Außenseiten von Gebäuden, insbesondere für die Außenwände oder die Dächer, mit wenigstens einer strukturtransparenten Wärmedämmschicht (5) nach Anspruch 1 oder nach Anspruch 1 und einem oder mehreren der Ansprüche 2 bis 4, **dadurch gekennzeichnet, daß** die strukturtransparente Wärmedämmschicht (5) nach außen zu mit einer transparenten Abdeckung (2) versehen ist und nach innen zu an der Außenwand (10) eines Mauerwerks (11) o.dgl., wie Glas oder Wabe, entweder direkt oder indirekt über eine Zwischenschicht anschließend angeordnet ist.

6. Integrierte Wärmedämmanordnung nach dem vorhergehenden Anspruch, dadurch gekennzeichnet, daß die strukturtransparente Wärmedämmschicht (5) nach außen zu mit einer, insbesonders dicht an der strukturtransparenten Wärmedämmschicht (5) angebrachten, diffusionsoffenen, transparenten Abdeckung (2) abgedeckt ist, die vorzugsweise aus einem mit Poren versehenen und/oder wasserabweisenden Material besteht.

7. Integrierte Wärmedämmanordnung nach einem der beiden vorhergehenden Ansprüche, dadurch gekennzeichnet, daß die strukturtransparente Wärmedämmschicht (5) nach außen zu mit einer transparenten Abdeckung (2) abgedeckt ist, die mit einer Hinterlüftung (4), insbesonders zwischen dieser und der strukturtransparenten Wärmedämmschicht (5) angeordnet, versehen ist.

8. Integrierte Wärmedämmanordnung nach einem der Ansprüche 5 bis 7, dadurch gekennzeichnet, daß die Zwischenschicht von der strukturtransparenten Wärmedämmschicht (5) nach innen zu, insbesonders zu der Außenwand (10) des Mauerwerks (11) hin, als eine Wärmeaustauschschicht (9) ausgebildet ist, die mit Wärmeaustauscherrohren oder Luftkanälen (27) bestückt ist.

9. Integrierte Wärmedämmanordnung nach einem der Ansprüche 5 bis 8, dadurch gekennzeichnet, daß die strukturtransparente Wärmedämmschicht (5) zwischen der transparenten Abdeckung (2) nach außen hin in der Hinterlüftung (4) und nach innen zu, insbesondere zur Außenwand (10) des Mauerwerks (11) hin, in einem variablen Hinterlüftungsspalt (8), verschieblich angebracht ist.

10. Integrierte Wärmedämmanordnung nach einem der Ansprüche 5 bis 9, dadurch gekennzeichnet, daß die transparente Abdeckung (2) aus Platten gebildet ist, die an der Außenseite (1) der integrierten Wärmedämmanordnung, mit Unebenheiten versehen sind, vorzugsweise in Form von außen genarbtem Glas, wie sie zur Vermeidung der äußeren Spiegelwirkung verwendet werden.

11. Integrierte Wärmedämmanordnung nach Anspruch 5 oder nach Anspruch 5 und einem oder mehreren der Ansprüche 6 bis 10, zur Anbringung an ein Mauerwerk (12) oder dgl., **dadurch gekennzeichnet, daß** die strukturtransparente Wärmedämmschicht (5) offen an die Mauerwerksaußenwand (10) eines an die strukturtransparente Wärmedämmschicht angepaßten Mauerwerks (12) anschließt, das aus Steinen, insbesonders mit durchgehenden Löchern (30), aufgebaut ist und vorzugsweise aus wandoffen liegend verlegten Hochlochziegeln besteht.

12. Integrierte Wärmedämmanordnung zur Anbringung an ein Mauerwerk (12) oder dgl., nach Anspruch 11, dadurch gekennzeichnet, daß deren strukturtransparente Wärmedämmschicht (5), aus einer "Wellpappen-Wabe" besteht, bei der das Material der "Wellpappen-Wabe" und ihre Struktur die kapillare Leitung und die Abführung von Feuchtigkeit durch Diffusion von der Außenwand (10) nach außen gestattet.

13. Integrierte Wärmedämmanordnung zur Anbringung an ein Mauerwerk (12) oder dgl., nach einem der beiden vorhergehenden Ansprüchen, dadurch gekennzeichnet, daß bei Anbringung der integrierten Wärmedämmanordnung an einer Gebäudewand, die in der strukturtransparenten Wärmedämmschicht (5) angeordneten Kanäle wenigstens leicht schräg zur Oberfläche der Wärmedämmschicht (5) ausgerichtet sind, insbesonders an einer Mauerwerksaußenwand (10) zur Außenseite (1) hin nach unten verlaufend.

14. Integrierte Wärmedämmanordnung zur Anbringung an ein Mauerwerk (12) oder dgl., nach einem der Ansprüche 11 bis 13, dadurch gekennzeichnet, daß zusätzlich zu der strukturtransparenten Wärmedämmschicht (5) an der Mauerwerksinnenwand (6), vorzugsweise im Abstand zu dieser angeordnet, eine innere Begrenzungswand (15), einen innen liegenden Luftkanal (14) bildend, angeordnet ist, der aus nebeneinander liegenden, lotrecht verlaufenden Teilkanälen gebildet ist.

15. Integrierte Wärmedämmanordnung zur Anbringung an ein Mauerwerk (12) oder dgl., nach einem der Ansprüche 11 bis 14, dadurch gekennzeichnet, daß das an die strukturtransparente Wärmedämmschicht (5) anschließende Mauerwerk (13) aus Steinen besteht, deren liegende Löcher (31) an der Mauerwerksaußenwand (10), der Wärmedämmschicht (5) zugewandt, ein größeres Lumen aufweisen, als an der Mauerwerksinnenwand (6).

16. Integrierte Wärmedämmanordnung zur Anbringung an ein Mauerwerk (12) oder dgl., nach einem der Ansprüche 11 bis 15, dadurch gekennzeichnet, daß an der Mauerwerksinnenwand (6) des an die strukturtransparente Wärmedämmschicht (5) anschließenden Mauerwerks (12) eine innenliegende Wärmeaustauschschicht (17) angeordnet ist, in die Wärmeaustauscherrohre oder Luftkanäle (32) eingebaut sind und die mit den Wärmeaustauscherrohren oder Luftkanälen (27) der Wärmeaustauschschicht (9) an der Mauerwerksaußenwand (10) zu einem Kreislauf verbunden sind.

17. Integrierte Wärmedämmanordnung zur Anbringung an ein Mauerwerk (12) oder dgl., nach einem der vorhergehenden Ansprüche 11 bis 15, dadurch gekennzeichnet, daß die strukturtransparente Wärmedämmschicht (5) zwischen einer lotrechten Konterlattung (21) oder einer waagrechten Querlattung (22) angebracht ist, die vorzugsweise an der Mauerwerksaußenwand (10) befestigt sind, wobei die Konterlattung (21) mit waagrechten Befestigungsprofil- und Befestigungshakenträgern (20) und die Querlattung (22) mit einer lotrechten Traglattung (24) versehen ist, welche die Befestigungsprofile (23) bzw. Die Befestigungshaken (25) für die transparente Abdeckung(2) oder die diffusionsoffene Abdeckung (3) tragen, die vorzugsweise aus Tafeln bestehen, die reihenweise, gegeneinander versetzt angebracht sind.

## Claims

1. Structurally transparent thermal-insulating layer (5), particularly provided for the exterior of buildings, which comprises an insulating material made of a of a plurality of side-by-side disposed thin open channels, at least nearly parallel-directed to the thermal stream, the channels, formed in the structurally transparent thermal-insulating layer (5), exhibit a diameter which is small in relation to the thickness of the insulating layer (5), wherein open channels (26), running through the thermal-insulating layer, exhibit substantially uniform diameters, the thermal-insulating material consisting substantially of cellulose-fibers such as paper- or cardboard-fibers, wherein the individual layers leave open channels (26) running through the thermal-insulating layer, produced of elements which are thin in relation to the layer thickness of the solar-energy transparent thermal-insulating layer, forming the structurally transparent thermal-insulating layer (5), **characterized in that** the structurally transparent thermal-insulating layer (5) with the three-dimensional structure of a "cardboard-honeycomb", consisting of fibrous cellulose-material, such as cardboard, is formed of a plurality of layers generated by wave-shaped sheets running back and forth, particularly with planar sheets between the wave-shaped sheets and the channels (26), formed in the structurally transparent thermal-insulating layer (5), exhibit a diameter which is small in relation to the thickness of the structurally transparent thermal-insulating layer (5) and which is preferably at the most one tenth of the thickness of the insulating layer (5) and which is of equal size in all channels.

2. Structurally transparent thermal-insulating layer (5) according to the preceding claim, characterized in that, thermal-insulating material of the structurally transparent thermal-insulating layer (5) is formed of sheets, which are welded or adhesively attached to each other and produced of fibrous cellulose material, such as cardboard, wherein the individual layers leave open the channels (26) running through the thermal-insulating layer and wherein the capillary conduction and diffusion of humidity is substantially maintained.

3. Structurally transparent thermal-insulating layer (5) according to one of the preceding claims, characterized in that the structurally transparent thermal-insulating layer (5) is produced of a "corrugated cardboard honeycomb", which is soaked in an immersion method, or preferably sprayed,for inking with color pigments and/or fire-retardation with fire-retarding chemicals, in particular with water glass, boron salt solutions or the like and/or is soaked with biocidic agents.

4. Structurally transparent thermal-insulating layer (5) according to one of the preceding claims, characterized in that the channels , disposed in the structurally transparent thermal-insulating layer (5), are disposed at least slightly inclined relative to the surface of the of the thermal-insulating layer (5).

5. Integrated thermal-insulating arrangement provided for the exterior of buildings or roofs, comprising at least one structurally transparent thermal-insulating layer (5) according to claim 1 or to claim 1 and one or mor than one of the claims 2 to 4, **characterized in that** the structurally transparent thermal-insulating layer (5) is furnished on the outer side (1) with a transparent covering (2) and is applied toward the inside, at the outer wall (10) of a walling (11) or the like, such as glass or honeycomb, directly or indirectly by an intermediate layer.

6. Integrated thermal-insulating arrangement according to the preceding claim, characterized in that, the structurally transparent thermal-insulating layer (5) is furnished on the outer side (1), with a particularly sealingly applied toward the structurally transparent thermal-insulating layer (5) the diffusion-open transparent covering (2), preferably comprises a material furnished with pores and/or awater-repellent material.

7. Integrated thermal-insulating arrangement according to one of the both preceding claims, characterized in that the structurally transparent thermal-insulating layer (5) is furnished on the outer side (1), with a transparent covering (2), which leaves open a rear ventilation (4) particularly toward the structurally transparent thermal-insulating layer (5).

8. Integrated thermal-insulating arrangement according to one of the claims 5 to 7, characterized in that a heat-exchanger layer (9) is disposed between the structurally transparent thermal-insulating layer (5) toward the inside, in particular of the outer wall (10) of the walling, wherein the heat-exchanger layer (9) is furnished with heat exchanger tubes or air channels (27).

9. Integrated thermal-insulating arrangement according to one of the claims 5 to 8, characterized in that the structurally transparent thermal-insulating layer (5) is shiftably applied between the transparent covering (2) and toward the outside in the rear ventilation (4), and toward the inside, in particular toward the outer wall (10) of the walling, in a variable rear ventilation slot (8).

10. Integrated thermal-insulating arrangement according to one of the claims 5 to 9, characterized in that the the transparent covering (2) is formed of plates, which are furnished outside with an uneven surface structure at the outside of the integrated thermal-insulating arrangement, preferably in the form of a glass having a granulated and corned outer surface,such as employed for avoiding an outer reflecting effect.

11. Integrated thermal-insulating arrangement according to claim 5 or to claim 5 one or several of the claims 6 to 10, for attaching to a walling (11) or the like, **characterized in that** the structurally transparent thermal-insulating layer (5) adjoins in an open way to the outer wall (10) of the walling of a masonry (12) made of stones with holes (30) passing through the stones, preferably made of wall-open, horizontally placed, vertically perforated bricks.

12. Integrated thermal-insulating arrangement for attaching to a masonry (12) or the like, according to claim 11, characterized in that the structurally transparent thermal-insulating layer (5) is made of a "cardboard-honeycomb", produced in the way, that the material and the structure of the "cardboard-honeycomb" permits the transport of humidity per diffusion from the outer wall (10) to the outside.

13. Integrated thermal-insulating arrangement for attaching to a masonry (12) or the like, according to one of the both preceding claims, characterized in that the channels disposed in the structurally transparent thermal-insulating layer (5), which is attached to the wall of a building, are at least slightly inclined to the surface of the thermal-insulating layer (5) and particularly are running downwardly toward the outer side (1) at the outer wall (10) of a masonry.

14. Integrated thermal-insulating arrangement for attaching to a masonry (12) or the like, according to one of the claims 11 to 13, characterized in that an interior delimiting wall (15), forming an interior disposed air channel (14), provided supplementary to the structurally transparent thermal-insulating layer (5) and preferably disposed at a distance, at the interior wall (6) of the walling of the masonry (12), wherein the interiorm delimiting wall (15) is formed of side-by-side disposed, vertically running partial channels.

15. Integrated thermal-insulating arrangement for attaching to a masonry (12) or the like, according to one of the claims 11 to 14, characterized in that the masonry (13) adjoining to the structurally transparent thermal-insulating layer (5) is composed of stones, wherein horizontally placed holes (31) of the stones at the outer wall (10) of the walling exhibit a larger diameter as compared to the interior wall (6) of the walling.

16. Integrated thermal-insulating arrangement for attaching to a masonry (12) or the like, according to one of the claims 11 to 15, characterized in that an interior disposed heat-exchanger layer (17) is arranged at the interior wall (6) of the walling, wherein the heat exchanger tubes or air channels (32) are incorporated in the heat-exchanger layer (17), and wherein the heat exchanger tubes or air channels (32) are connected to the heat-exchanger tubes or air channels (27) of the heat-exchanger layer (9) at the outer wall (10) of the walling to form a circulation.

17. Integrated thermal-insulating arrangement for attaching to a masonry (12) or the like, according to one of the claims 11 to 16, characterized in that the structurally transparent thermal-insulating layer (5) is disposed between a vertically disposed counter lath system (21) or a horizontal disposed cross lath system (22), which are preferably attached at the outer wall (10) of the walling, wherein the counter lath system (21) is furnished with horizontal attachement profiles and attachement hook supports (20), and wherein the cross lath system (22) is furnished with a vertical support lath (24), which supports the attachement profiles (23) or, respectively the attachement hooks (25) for the transparent covering (2) or the diffusion-open covering (3), and which preferably comprises plates, which are disposed in rows and staggered relative to each other.

## Revendications

1. Couche d'isolation thermique (5) transparente vis-à-vis de la structure, en particulier pour des façades extérieures de bâtiment, comprenant une pluralité de canaux ouverts (26) minces vis-à-vis de l'épaisseur de la couche, disposés les uns à côté des autres et au moins pratiquement dirigés dans la même direction que le flux thermique en traversant la couche d'isolation thermique (5), lesdits canaux présentant sensiblement un diamètre régulier de bout en bout, le matériau d'amortissement étant constitué de fibres, sensiblement en matériau à base de cellulose, tel que du papier ou des fibres de carton, dans lequel sont dégagés les canaux qui traversent la couche d'isolation thermique, et forment la couche d'isolation thermique (5) transparente vis-à-vis de la structure avec les éléments minces en relation à l'épaisseur de la couche,
caractérisée en ce que la couche d'isolation thermique (5) transparente vis-à-vis de la structure, qui présente une structure dans l'espace en nid d'abeilles de carton ondulé, est réalisée en matériau cellulosique fibreux, tel que du carton, et est formée d'une pluralité de couches de bandes ondulées passées en va-et-vient, en particulier avec des bandes planes agencées entre celles-ci, et les canaux (26) formés par les bandes ondulées et/ou avec celles-ci, ont un diamètre faible en relation à l'épaisseur de la couche d'isolation thermique (5), qui s'élève de préférence au plus à un dixième de leur épaisseur, et en ce que ledit diamètre est sensiblement égal pour tous les canaux.

2. Couche d'isolation thermique et transparente vis-à-vis de la structure, selon la revendication précédente, caractérisée en ce que le matériau d'amortissement de la couche d'isolation thermique (5) est constitué par des bandes collées les unes sur les autres en matériau cellulosique fibreux, tel que du carton, dont les propriétés de transmission capillaire de l'humidité et de diffusion sont sensiblement conservées, dans lesquelles sont ménagés des canaux (26) qui s'étendent à travers la couche d'isolation thermique (5).

3. Couche d'isolation thermique transparente vis-à-vis de la structure, selon l'une des revendications précédentes, caractérisée en ce que la couche d'isolation thermique (5) constituée en nid d'abeilles de carton ondulé, est exposée, de préférence par pulvérisation, à des pigments colorés en vue de la coloration et/ou à des produits chimiques ignifuges en vue de la protection vis-à-vis du feu, de préférence avec du silicate, des solutions de sels de bore, ou similaires et/ou à des produits biocides, ou bien trempée dans de tels produits par un procédé par immersion.

4. Couche d'isolation thermique transparente vis-à-vis de la structure, selon l'une des revendications précédentes, caractérisée en ce que les canaux ménagés dans la couche d'isolation thermique (5) sont agencés au moins légèrement en oblique par rapport à la surface de la couche d'isolation thermique (5).

5. Agencement d'isolation thermique intégré pour des façades extérieures de bâtiment, en particulier pour les murs extérieurs ou les toits, comprenant au moins une couche d'isolation thermique (5) transparente vis-à-vis de la structure selon la revendication 1, ou bien selon la revendication 1 et l'une ou plusieurs des revendications 2 à 4, caractérisé en ce que la couche d'isolation thermique (5) est pourvue vers l'extérieur d'un revêtement transparent (2), et est appliquée vers l'intérieur sur la paroi extérieure (10) d'une maçonnerie (11) ou similaire, tels que par exemple du verre ou bien une structure en nid d'abeilles, soit directement, soit indirectement via une couche intermédiaire.

6. Agencement d'isolation thermique intégré selon la revendication précédente, caractérisé en ce que la couche d'isolation thermique (5) transparente vis-à-vis de la structure est revêtue à l'extérieur d'un revêtement transparent (2), appliqué en particulier de manière étanche contre la couche d'isolation thermique (5) et ouvert à la diffusion, ledit revêtement étant de préférence en un matériau présentant des pores et/ou hydrofuge.

7. Agencement d'isolation thermique intégré selon l'une ou l'autre des revendications 5 et 6, caractérisé en ce que la couche d'isolation thermique (5) est revêtue vers l'extérieur par un revêtement transparent (2) lequel est pourvu d'une aération postérieure (4), agencée en particulier entre le revêtement et la couche d'isolation thermique (5).

8. Agencement d'isolation thermique intégré selon l'une des revendications 5 à 7, caractérisé en ce que la couche intermédiaire de la couche d'isolation thermique (5) est réalisée vers l'intérieur, en particulier en direction de la paroi extérieure (10) de la maçonnerie (11), à la manière d'une couche d'échange thermique (9), laquelle est équipée de tubes caloporteurs, ou bien de canaux à air (27).

9. Agencement d'isolation thermique intégré selon l'une des revendications 5 à 8, caractérisé en ce que la couche d'isolation thermique (5) est agencée de manière mobile entre le revêtement transparent (2) vers l'extérieur dans l'aération postérieure (4) et vers l'intérieur, en particulier vers la paroi extérieure (10) de la maçonnerie (11), dans un intervalle d'aération postérieure variable (8).

10. Agencement d'isolation thermique intégré selon l'une des revendications 5 à 9, caractérisé en ce que le revêtement transparent (2) est formé par des plaques pourvues d'irrégularités vers la face extérieure (1) de l'agencement d'isolation thermique intégré, de préférence sur la forme de verre grainé à l'extérieur, tel qu'on l'utilise pour éviter l'effet de réflexion extérieur.

11. Agencement d'isolation thermique intégré selon la revendication 5, ou selon la revendication 5 et l'une ou plusieurs des revendications 6 à 10, destiné à être appliqué contre une maçonnerie (12) ou similaire, caractérisé en ce que la couche d'isolation thermique (5) transparente vis-à-vis de la structure se raccorde de manière ouverte à la paroi extérieure (10) d'une maçonnerie (12) adaptée à la couche d'isolation thermique, ladite maçonnerie étant construite avec des pierres, en particulier avec des trous traversants (30), et de préférence avec des briques creuses posées de manière à être ouvertes sur les côtés.

12. Agencement d'isolation thermique intégré, destiné à être appliqué sur une maçonnerie (12) ou similaire, selon la revendication 11, caractérisé en ce que sa couche d'isolation thermique (5) transparente vis-à-vis de la structure est constituée d'un nid d'abeilles en carton ondulé, dans lequel le matériau du nid d'abeilles en carton ondulé et sa structure permettent la transmission capillaire et l'évacuation d'humidité par diffusion depuis la paroi extérieure (10) vers l'extérieur.

13. Agencement d'isolation thermique intégré destiné à être appliqué contre une maçonnerie (12) ou similaire, selon l'une ou l'autre des revendications 11 et 12, caractérisé en ce que lors de l'application de l'agencement d'isolation thermique intégré contre une façade de bâtiment, les canaux ménagés dans la couche isolation thermique (5) sont orientés au moins légèrement en oblique par rapport à la surface de la couche d'isolation thermique (5), et s'étendent en particulier au niveau d'une paroi extérieure de la maçonnerie (10) en descendant vers la face extérieure (1).

14. Agencement d'isolation thermique intégré destiné à être appliqué contre une maçonnerie (12) ou similaire, selon l'une des revendications 11 à 13, caractérisé en ce que, en plus de la couche d'isolation thermique (5) transparente vis-à-vis de la structure, il est formé sur la paroi intérieure (6) de la maçonnerie une paroi de délimitation intérieure (15) agencée de préférence à distance de la paroi intérieure de la maçonnerie en formant un canal d'air intérieur (14), celui-ci étant formé de canaux partiels disposés les uns à côté des autres et s'étendant verticalement.

15. Agencement d'isolation thermique intégré destiné à être appliqué contre une maçonnerie (12) ou similaire, selon l'une des revendications 11 à 14, caractérisé en ce que la maçonnerie (13) qui se raccorde à la couche d'isolation thermique (5) transparente vis-à-vis de la structure, est réalisée en pierres, dont les trous (31) présentent une plus grande ouverture du côté de la paroi extérieure de la maçonnerie (10), tournée vers la couche d'isolation thermique (5), qu'au niveau de la paroi intérieure (6) de la maçonnerie.

16. Agencement d'isolation thermique intégré destiné à être appliqué contre une maçonnerie (12) ou similaire, selon l'une des revendications 11 à 15, caractérisé en ce qu'une couche d'échange thermique intérieure (10) est agencée contre la paroi intérieure de la maçonnerie (12) qui se raccorde à la couche d'isolation thermique (5), et dans cette couche d'échange thermique sont intégrés des tubes caloporteurs ou des canaux à air (32), lesquels sont reliés aux tubes caloporteurs ou aux canaux à air (27) de la couche d'échange thermique (9) au niveau de la paroi extérieure (10) de la maçonnerie, pour constituer un circuit fermé.

17. Agencement d'isolation thermique intégré destiné à être appliqué contre une maçonnerie (12) ou similaire, selon l'une des revendications 11 à 15, caractérisé en ce que la couche d'isolation thermique (5) est disposée entre des lattes d'appui verticales (21), ou bien des lattes transversales horizontales (22), lesquelles sont de préférence fixées sur la paroi extérieure (10) de la maçonnerie, les lattes d'appui (21) étant pourvues de profilés de fixation horizontaux et de porte-crochets (20) de fixation, et les lattes transversales (22) étant pourvues de lattes porteuses verticales (24), lesquelles portent les profilés de fixation (23) ou les crochets de fixation (25) pour le revêtement transparent (2) ou pour le revêtement (3) ouvert à la diffusion, lesquels sont de préférence constitués par des panneaux qui sont montés en rangées et en décalage les uns par rapport aux autres.
